(19) Europäisches Patentamt
European Patent Office
Office européen des brevets

(11) Veröffentlichungsnummer: **0 242 502**
**A2**

(12) **EUROPÄISCHE PATENTANMELDUNG**

(21) Anmeldenummer: **87100638.3**

(22) Anmeldetag: **19.01.87**

(51) Int.Cl.[3]: **A 01 N 57/16**
A 01 N 57/12, A 01 N 47/34
A 01 N 43/90
//(A01N57/16, 43:90),
(A01N57/12, 43:90), (A01N47/34,
43:90), (A01N43/90, 43:78,
43:24, 37:06)

(30) Priorität: **25.01.86 DE 3602276**
**17.09.86 DE 3631559**

(43) Veröffentlichungstag der Anmeldung:
**28.10.87 Patentblatt 87/44**

(84) Benannte Vertragsstaaten:
**AT BE CH DE ES FR GB GR IT LI LU NL SE**

(71) Anmelder: **HOECHST AKTIENGESELLSCHAFT**
**Postfach 80 03 20**
**D-6230 Frankfurt am Main 80(DE)**

(72) Erfinder: **Knauf, Werner, Dr.**
**Im Kirschgarten 24**
**D-6239 Eppstein/Taunus(DE)**

(72) Erfinder: **Waltersdorfer, Anna, Dr.**
**Rauenthaler Weg 28**
**D-6000 Frankfurt am Main(DE)**

(72) Erfinder: **Sagenmüller, Alfons, Dr.**
**Komotauerweg 8**
**D-6092 Kelsterbach(DE)**

(72) Erfinder: **Stier, Hubert**
**Erzberger Strasse 5**
**D-6093 Floersheim am Main(DE)**

(72) Erfinder: **Lourens, Jan, Dr.**
**Sagu Street 1875 Dasmarinas Village**
**Makati Metro-Manila(PH)**

(54) **Schädlingsbekämpfungsmittel.**

(57) Kombinationen aus Verbindungen der Formel I,

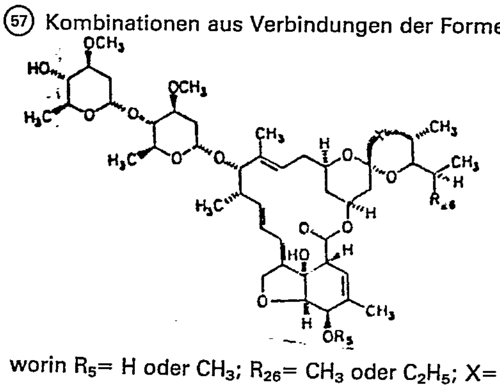

(I),

worin $R_5$= H oder $CH_3$; $R_{26}$= $CH_3$ oder $C_2H_5$; X= $-CH=CH-$,

OH
$-CH_2-CH-$

oder $-CH_2-CH_2-$ bedeuten, mit einem ausgewählten Insektizid aus der Gruppe der Phosphorsäureester, der Carbamate, der Carbonsäureester, oder einem Insektizid der Formel II

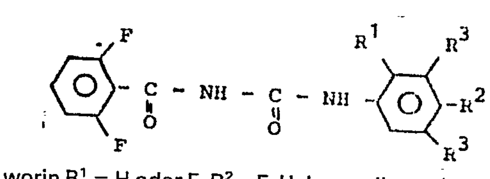

II,

worin $R^1$ = H oder F, $R^2$= F, Halogenalkoxy, (subst.) Phenoxy, (subst.) Pyridyloxy, $R^3$= H, Cl bedeuten, oder einem Wirkstoff der Gruppe Azocyclotin, Binapacryl, Bensultap, Bisclofentezin, Buprofecin, Cartap, Cyromacin, Endosulfan, Ethoproxyfen, Fenoxycarb, Flubenzimin, Hexythiazox, Ethofenprox, 5-[4-(4-Ethoxyphenyl)-4-methylpentyl]-2-fluor-1,3-diphenylether, 3-(2-Chlorphenyl)-3-hydroxy-2-(2-phenyl-4-thiazolyl)-propennitril oder Thiocyclam, mit Bacillus thuringiensis oder einem Kernpolyeder- oder Granulosevirus besitzen überraschende vorteilhafte Wirkungen bei ihrem Einsatz gegen Schadinsekten und Akariden.

EP 0 242 502 A2

Schädlingsbekämpfungsmittel

Aus der Gruppe der mikrobiellen Metabolite sind einige Verbindungen bekannt, die insektizide und akarizide Wirkung besitzen. Zu diesen gehören Verbindungen aus der Klasse der Avermectine und deren Derivate. Bei diesen Verbindungen handelt es sich um ein Stoffgemisch von macrocyclischen Lactonen der Formel I,

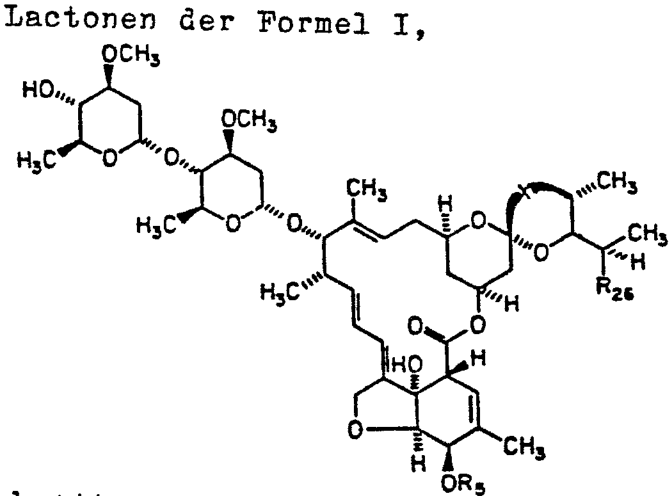

(I)

wobei die Substituenten folgende Bedeutungen besitzen können:

$R_5$= H oder $CH_3$

$R_{26}$= $CH_3$ oder $C_2H_5$ und

X= $-CH{=}CH-$, $-CH_2-\overset{OH}{\overset{\vdots}{C}}H-$ oder $-CH_2-CH_2-$.

Diese werden aus dem Mikroorganismus Streptomyces avermitilis isoliert, s. Fisher, M.H.: The Avermectins in Recent Advances in the Chemistry of Insect Control edited by N.F. Janes; 1985; es handelt sich im wesentlichen um acht Komponenten, Komponenten $A_{1a}$, $A_{1b}$, $A_{2a}$, $A_{2b}$, $B_{1a}$, $B_{1b}$, $B_{2a}$, $B_{2b}$, s. I. Putter et al. Experientia 37 (1981) S. 963, Birkhäuser Verlag (Schweiz). Daneben besitzen auch synthetische Derivate, insbesondere Dihydroderivate (X= $-CH_2-CH_2$)), Interesse z.B. das Produkt Ivermectin, s. Dybas, Green, British Crop. Protection Conference, Pests and Diseases, S. 947, 951 (1984).

In den südafrikanischen Patentanmeldungen Nr. 842 565 und Nr. 842 567 sind ferner Kombinationen von Avermectinen mit bestimmten Insektiziden beschrieben.

Es wurdennun neue Kombinationen von Avermectinen und Derivaten der Formel I mit anderen ausgewählten Insektiziden und Akariziden gefunden, bei denen überraschenderweise synergistische Wirkungen auftreten.

Gegenstand der Erfindung sind daher Schädlingsbekämpfungsmittel, die mindestens eine Verbindung der Formel I in Kombination mit einem Phosphorsäureester der Gruppe Azinphos-ethyl, Azinphos-methyl, 1-(4-Chlorphenyl)-4-[(O-ethyl, S-propyl)phosphoryloxy]pyrazol (TIA-230), Coumaphos, Demeton, Demeton-S-methyl, Dimethoat, Ethoprophos, Etrimfos, Fenitrothion, Fenthion, Heptenophos, Phosalon, Pirimiphos-ethyl, Pirimiphos-methyl, Profenofos, Prothiofos, Sulprofos oder Triazophos, oder

einem Carbamat der Gruppe Bendiocarb, BPMC (2-(1-Methylpropyl)phenylmethylcarbamat), Butocarboxim, Butoxicarboxim, Carbosulfan, Cloethocarb, Isoprocarb, Oxamyl, Pirimicarb, Promecarb oder Thiodicarb oder

einem Carbonsäureester der Gruppe Allethrin, Alphametrin, Bioallethrin, Bioresmethrin, Cycloprothrin, Cyfluthrin, Cyhalothrin, 2,2-Dimethyl-3-(2-chlor-2-trifluormethylvinyl)cyclopropancarbonsäure-(α-cyano-3-phenyl-2-methylbenzyl)ester (FMC 54800), Fenpropathrin, Fenfluthrin, Flucythrinate, Flumethrin, Tralomethrin oder

einem Benzoylharnstoff der Formel II

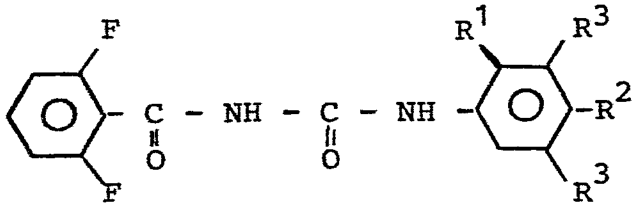

(II)

worin

$R^1$ H oder F,

$R^2$ Fluor, $(C_1-C_4)$Halogenalkoxy, Phenoxy oder Pyridyloxy, die beide durch ein bis drei Reste der Gruppe Chlor

0242502

oder Trifluormethyl substituiert sind, und
$R^3$ H oder Cl bedeuten, oder
einem Wirkstoff der Gruppe Azocyclotin, Binapacryl, Bensultap, Bisclofentezin, Buprofecin, Cartap, Cyromacin, Endosulfan, Ethoproxyfen, Fenoxycarb, Flubenzimin, Hexythiazox, Ethofenprox (MTI-500), 5-[4-(4-Ethoxyphenyl)-4-methylpentyl]-2-fluor-1,3-diphenylether (MTI 800), 3-(2-Chlorphenyl)-3-hydroxy-2-(2-phenyl-4-thiazolyl)-propennitril (SN 72129) oder Thiocyclam, mit Bacillus thuringiensis oder einem Kernpolyeder- oder Granulosevirus wie das Cydia pomonella Granulosevirus (CpGV) enthalten.

Die Avermectine der Formel I werden in der Regel als Gemische eingesetzt. Von besonderem Interesse ist hierbei das Product Abamectin, das im wesentlichen die Avermectine $B_1$ enthält, s. K.E. Nowels, Agrichem. Age., Januar 1985, S. 28.

$(C_1-C_4)$Halogenalkoxy in Formel II enthält insbesondere ein oder mehrere Fluor oder Chloratome. Von besonderer Bedeutung ist der Rest Tetrafluorethoxy.

Beispiele für Verbindungen der Formel II sind die folgenden Verbindungen IIa - IId:

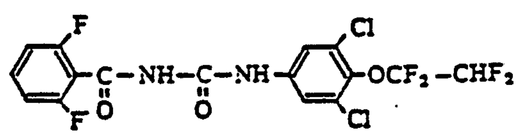

IIa

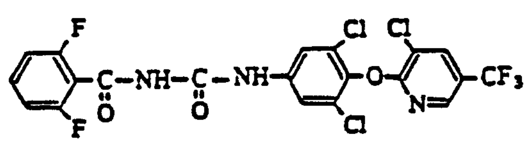

IIb

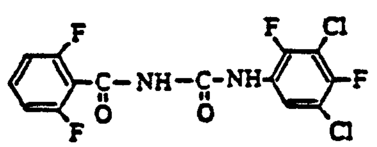

IIc

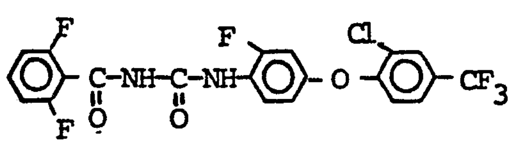

IId

Die obengenannten Wirkstoffe, für die common names angegeben wurden, sind mit wenigen Ausnahmen, die unten angegeben werden, in CH.R. Worthing, S.B. Walker, The Pesticide Manual, 7th ed. British Crop. Protection Council (1983) beschrieben.

Die übrigen Verbindungen werden in folgenden Veröffentlichungen beschrieben:

| | |
|---|---|
| TIA-230 : | IUPAC Kongreß-Bericht, Pesticide Chemistry 1982, Kyoto Japan. |
| FMC 54800: | H.J. Doel et al., FMC 54800, A New Acaricide-Insecticide, Symposium Gent (1984) |
| MTI 500, MTI 800 : | Recent Advances in the Chemistry of Insect Control, Int. Symposium 25-27 Sept. 1984, Cambridge |
| SN 72129 : | E.P. Pieters et al., Field Experiences with SN 72129, A New Selective Insecticide, 17th Int. Congress of Entomology 1984, Hamburg. |

Die Verbindung IIa ist unter dem Code-Namen XRD-473 bekannt geworden, s. Sbragia, R.J. et al. Proceeding 10th Int. Congress Plant Protection (1983), Brighton, Vol. 1, Seite 417-424. Die Verbindung IIb besitzt den common name Chlorfluazuron (Neumann, R. and Guyer, W. Proc. loc. cit. S. 445-451), die Verbindung IIc den common name Teflubenzuron (Becher, H.M. et al., Proc. loc. cit. 408-415); die Verbindung IId besitzt den common name Flufenoxuron (Anderson, H. et al. Proceedings Vol. 1, S. 89-96, British Crop Prot. Conf. (1986).

Von den Kombinationspartnern für die Verbindungen der Formel I sind erfindungsgemäß von besonderem Interesse die Wirkstoffe Binapacryl, Endosulfan, Heptenophos, Hexythiazox, Triazophos oder die Verbindungen der Formeln IIa bis IId, insbesondere von letzteren IIc (Teflubenzuron).

Erfindungsgemäß können die Verbindungen der Formel I auch mit zwei oder mehreren der aufgezählten Wirkstoffe kombiniert werden.

Die insektizide und akarizide Wirksamkeit der erfindungsgemäßen Wirkstoffkombinationen liegt deutlich höher als von den Wirkungen der Einzelkomponenten zu erwarten war. Durch Anwendung dieser Kombinationen können daher die Aufwandmengen der Einzelkomponenten reduziert werden. Ihre Anwendung bringt demzufolge ökonomische wie auch ökologische Vorteile.

Die erfindungsgemäßen Mittel eignen sich bei guter Pflanzenverträglichkeit und günstiger Warmblütertoxizität zur Bekämpfung von tierischen Schädlingen, insbesondere Insekten, Spinnentieren und Nematoden, besonders bevorzugt zur Bekämpfung von Insekten, sowie deren Entwicklungsstadien, die in der Landwirtschaft, in Forsten, im Vorrats- und Materialschutz sowie aus dem Hygienesektor vorkommen. Sie sind gegen normal sensible und resistente Arten sowie gegen alle oder einzelne Entwicklungsstadien wirksam. Zu den oben erwähnten Schädlingen gehören:

Aus der Ordnung der Isopoda z.B. Oniscus asellus, Armadillidium vulgare, Porcellio scaber.

Aus der Ordnung der Diplopoda z.B. Blaniulus guttulatus.

Aus der Ordnung der Chilopoda z.B. Geophilus carpophagus, Scutigera spp.

Aus der Ordnung der Symphyla z.B. Scutigerella immaculata.

Aus der Ordnung der Thysanura z.B. Lepisma saccharina.

Aus der Ordnung der Collembola z.B. Onychiurus armatus.

Aus der Ordnung der Orthoptera z.B. Blatta orientalis, Periplaneta americana, Leucophaea maderae, Blatella germanica, Acheta domesticus, Gryllotalpa spp., Locusta migratoria migratorioides, Melanoplus differentialis, Schistocerca gregaria.

Aus der Ordnung der Dermaptera z.B. Forficula auricularia.

Aus der Ordnung der Isoptera z.B. Reticulitermes spp.,

Aus der Ordnung der Anoplura z.B. Phylloera vastatrix, Pemphigus spp., Pediculus humanus corporis, Haematopinus spp., Linognathus spp.

Aus der Ordnung der Mallophaga z.B. Trichodectes spp., Damalinea spp.

Aus der Ordnung der Thysanoptera z.B. Hercinothrips femoralis, Thrips tabaci.

Aus der Ordnung der Heteroptera z.B. Eurygaster spp., Dysdercus intermedius, Piesma quadratum, Cimex lectularius, Rhodnius prolixus, Triatoma spp.

Aus der Ordnung der Homoptera z.B. Aleurodes brassicae, Bemisia tabaci, Trialeurodes vaporariorum, Aphis gossypii, Brevicoryne brassicae, Cryptomyzus ribis, Doralis fabae, Doralis pomi, Eriosoma lanigerum, Hyalopterus arundinis, Macrosiphum avenae, Myzus spp., Phorodon humuli, Rhopalosiphum padi, Empoasca spp., Euscelus bilobatus, Nephotettix cincticeps, Lecanium corni, Saissetia oleae, Laodelphax striatellus, Nilaparvata lugens, Aonidiella aurantii, Aspidiotus hederae, Pseudococcus spp., Psylla spp.

Aus der Ordnung der Lepidoptera z.B. Pectinophora gossypiella, Bupalus piniarius, Cheimatobia brumata, Lithocolletis blancardella, Hyponomeuta padella, Plutella maculipennis, Malacosoma neustria, Euproctis chrysorrhoea, Lymantria spp., Bucculatrix thurberiella, Phyllocnistis citrella, Agrotis spp, Euxoa spp., Feltia spp., Earias insulana, Heliothis spp., Laphygma exigua, Mamestra brassicae, Panolis flammea, Prodenia litura, Spodoptera spp., Trichoplusia ni, Carpocapsa pomonella, Pieris spp., Chilo spp., Pyrausta nubilalis, Ephestia kuehniella, Galleria mellonella, Cacoecia podana, Capua reticulana, Choristoneura fumiferana, Clysia ambiguella, Homona magnanima, Tortrix viridana.

Aus der Ordnung der Coleoptera z.B. Anobium punctatum, Rhizopertha dominica, Bruchidius obtectus, Acanthoscelides obtectus, Hylotrupes bajulus, Agelastica alni, Leptinotarsa decemlineata, Phaedon cochleariae, Diabrotica spp., Psylliodes chrysocephala, Epilachna varivestis, Atomaria spp., Oryzaephilus surinamensis, Anthonomus spp., Sitophilus spp., Otiorrhynchus sulcatus, Cosmopolites sordidus, Ceuthorrhynchus assimilis, Hypera postica, Dermestes spp., Trogoderma spp., Anthrenus spp., Attagenus spp., Lyctus spp., Meligethes aeneus, Ptinus spp., Niptus hololeucus, Gibbium psylloides, Tribolium spp., Tenebrio molitor, Agriotes spp., Conoderus spp., Melolontha melolontha, Amphimallon solstitialis, Costelytra zealandica.

Aus der Ordnung der Hymenoptera z.B. Diprion spp., Hoplocampa spp., Lasius spp., Monomorium pharaonis, Vespa spp.

Aus der Ordnung der Diptera z.B. Aedes spp., Anopheles spp., Culex spp., Drosophila melanogaster, Musca spp., Fannia spp., Calliphora erythrocephala, Lucilia spp., Chrysomyia spp., Cuterebra spp., Gastrophilus spp., Hypobosca spp., Stomoxys spp., Oestrus spp., Hypoderma

spp., Tabanus spp., Tannia spp., Bibio hortulanus, Oscinella frit, Phorbia spp., Pegomyia hyoscyami, Ceratitis capitata, Dacus oleae, Tipula paludosa. Aus der Ordnung der Siphonaptera z.B. Xenopsylla cheopis, Ceratophyllus spp.
Aus der Ordnung der Arachnida z.B. Scorpio maurus, Latrodectus mactans.

Kombinationen von Verbindungen I mit Verbindungen der Formel II eignen sich insbesondere für den Einsatz gegen Schädlinge aus
den Gattungen Plutella sp., Spodoptera sp., Alabama, sp., Anticarsia sp., Pseudoplusia sp., Pieris sp., Scrobipalpua sp., Trichoplusia sp., Choristoneura sp., Lymantria sp., Laspeyresia sp., Psylla sp., Epilachna sp., Leptinotarsa sp., Liriomyza sp., Bemisia sp., Trialeurodes sp., z.B. in den Kulturen Baumwolle, Soja, Gemüse, Obst, Citrus, Wein, Mais.

Auch können verschiedene Spinnmilbenarten, wie die Obstbaumspinnmilbe (Panonychus ulmi), die Citrusspinnmilbe (Panonychus citri) und die Bohnenspinnmilbe (Tetranychus urticae), darunter auch Phosphorsäureester-resistente Stämme, gut bekämpft werden.

Die erfindungsgemäßen Mittel enthalten die Wirkstoffe der Formel I, im allgemeinen zu 1 - 95 Gew.-%. Sie können als Spritzpulver, emulgierbare Konzentrate, versprühbare Lösungen, Stäubemittel oder Granulate in den üblichen Zubereitungen angewendet werden.

Spritzpulver sind in Wasser gleichmäßig dispergierbare Präparate, die neben dem Wirkstoff außer einem Verdünnungs- oder Inertstoff noch Netzmittel, z.B. polyoxethylierte Alkylphenole, polyoxethylierte Fettalkohole, Alkyl- oder Alkylphenol-sulfonate und Dispergiermittel, z.B. ligninsulfonsaures Natrium, 2,2'-dinaphthylmethan-6,6'-disulfonsaures Natrium, dibutylnaphthalinsulfonsaures Natrium oder auch oleylmethyltaurinsaures Natrium enthalten.

Emulgierbare Konzentrate werden durch Auflösen des Wirkstoffes in einem organischen Lösungsmittel, z.B. Butanol, Cyclohexanon, Dimethylformamid, Xylol oder auch höhersiedenden Aromaten oder Kohlenwasserstoffen unter Zusatz von einem oder mehreren Emulgatoren hergestellt. Als Emulgatoren können beispielsweise verwandt werden: Alkylarylsulfonsaure Calzium-Salze wie Ca-dodecylbenzolsulfonat oder nichtionische Emulgatoren wie Fettsäurepolyglykolester, Alkylarylpolyglykolether, Fettalkoholpolyglykolether, Propylenoxid-Ethylenoxid-Kondensationsprodukte, Alkylpolyether, Sorbitanfettsäureester, Polyoxyethylensorbitan-Fettsäureester oder Polyoxethylensorbitester.

Stäubemittel erhält man durch Vermahlen des Wirkstoffes mit fein verteilten festen Stoffen, z.B. Talkum, natürlichen Tonen wie Kaolin, Bentonit, Poryphillit oder Diatomeenerde. Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen auf die Oberfläche von Trägerstoffen wie Sand, Kaolinite, oder von granuliertem Inertmaterial. Auch können geeignete Wirkstoffe in der für die Herstellung von Düngemittelgranulaten üblichen Weise - gewünschtenfalls in Mischung mit Düngemitteln - hergestellt werden.

Das Gewichtsverhältnis der Verbindung der Formel I zum Kombinationspartner variiert in den erfindungsgemäßen

Mitteln je nach dem zu verwendenden Kombinationspartner im Bereich zwischen 20:1 bis 1:150, z.B. im Falle der Verbindungen IIa-IId insbesondere zwischen 5:1 und 1:5; ebenso können die Anwendungskonzentrationen der Kombinationen in weiten Grenzen in Abhängigkeit des zu verwendenden Kombinationspartners variieren und zwar zwischen 0,001 und 1,5 kg Wirkstoff/ha, im Falle der Verbindungen IIa-IId insbesondere zwischen 0,005 und 0,1 kg/ha.

Es lassen sich anstelle der Avermectine auch andere mikrobielle Metabolite , z.B. solche aus der Klasse der Nikkomycine, wie z.B. Nikkomycin Z der Formel

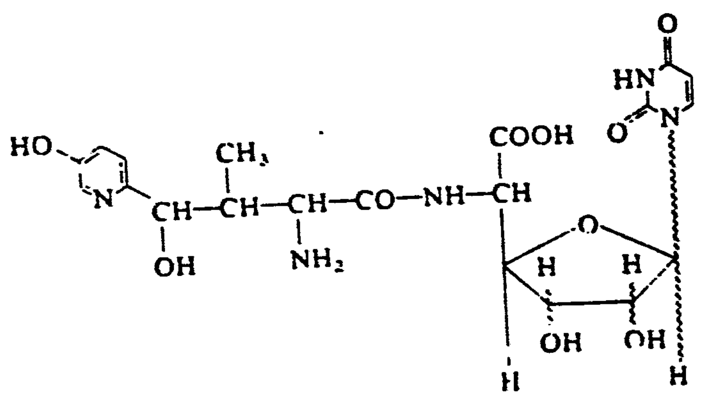

(Wegler: Chemie der Pflanzenschutz- und Schädlingsbekämpfungsmittel Band 6, S. 265, Springer-Verlag, 1981) oder Verbindungen aus der Klasse der Milbemycine, wie z.B. Milbemycin $ß_1$, $ß_2$, $ß_3$ der Formel

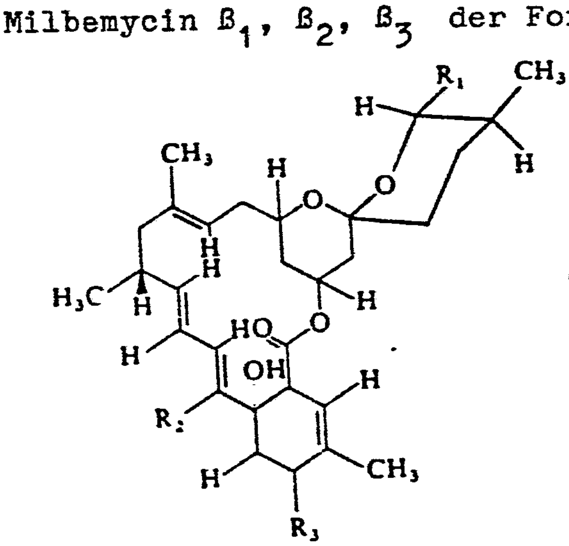

$\beta_1$: $R_1 = CH_3$, $R_2 = CH_2OH$, $R_3 = OCH_3$
$\beta_2$: $R_1 = C_2H_5$, $R_2 = CH_2OH$, $R_3 = OCH_3$
$\beta_3$: $R_1 = CH_3$, $R_2 = CH_3$, $R_3 = OH$

(Wegler: Chemie der Pflanzenschutz- und Schädlingsbekämpfungsmittel Band 6, S. 305, Springer-Verlag, 1981)

mit den obengenannten Insektiziden vorteilhaft kombinieren.

Die nachfolgenden Beispiele dienen zur Erläuterung der Erfindung.

## Biologische Beispiele

In allen Beispielen wurden Tankmischungen der Wirkstoffe in geeigneten Formulierungen ausgebracht.

### Beispiel I

Prüfobjekt: Trialeurodes vaporariorum (Eier)
Versuchspflanze: Phaseolus vulgaris
Art der Behandlung: Spritzen bis zum beginnenden Abtropfen

| Verbindung | Wirkstoffkonz. (ppm) | % Mortalität nach 14 d |
|---|---|---|
| Abamectin (Ia) | 3,9 | 65 |
| | 2,0 | 50 |
| Heptenophos | 125 | 0 |
| | 63 | 0 |
| Ia + Heptenophos (1 : 32) | 3,9 + 125 | 92 |
| | 2,0 + 63 | 80 |

Beispiel II

Prüfobjekt: Tetranychus urticae
Versuchspflanze: Phaseolus vulgaris
Art der Behandlung: Spritzen bis zum beginnenden Abtropfen

| Verbindung | Wirkstoffkonz. (ppm) | % Mortalität nach 7 d akar. | oviz. |
|---|---|---|---|
| Abamectin (I a) | 0,49 | 80 | 0 |
| | 0,24 | 45 | 0 |
| | 0,12 | 20 | 0 |
| Binapacryl | 63 | 97 | 75 |
| | 31 | 92 | 50 |
| | 16 | 40 | 25 |
| Ia + Binapacryl (1 : 128,6) | 0,49 + 63 | 100 | 100 |
| | 0,24 + 31 | 97 | 90 |
| | 0,12 + 16 | 90 | 50 |

Beispiel III

Prüfobjekt: Prodenia litura (Larvenstadium $L_3$ )
Versuchsmethode: Unterlagen- + Tierbehandlung (Schalentest)
Art der Behandlung: Spritzen analog 600l/ha

| Verbindung | Wirkstoffkonz. (ppm) | % Mortalität nach 7 d |
|---|---|---|
| Abamectin (Ia) | 1000 | 90 |
| | 500 | 30 |
| | 250 | 10 |
| | 125 | 0 |
| Binapacryl | 2000 | 0 |
| | 1000 | 0 |
| Ia + Binapacryl | 1000 + 2000 | 100 |
| (1 : 2) | 500 + 1000 | 90 |
| | 250 + 500 | 70 |
| | 125 + 250 | 10 |

## Beispiel IV

Behandlung, Prüfobjekt,Versuchspflanze wie Beispiel 1

| Verbindung | Wirkstoffkonz. (ppm) | % Mortalität nach 14 d |
|---|---|---|
| Abamectin (Ia) | 3,9 | 70 |
| | 2,0 | 60 |
| Endosulfan | 125 | 0 |
| | 63 | 0 |
| Ia + Endosulfan | 3,9 + 125 | 100 |
| (1 : 32) | 2,0 + 63 | 90 |

Beispiel V

Prüfobjekt: Panonychus ulmi
Versuchspflanze: Malus spp.
Art der Behandlung: siehe Beispiel I

| Verbindung | Wirkstoffkonz. (ppm) | % Mortalität nach 9 d akar. |
|---|---|---|
| Abamectin (Ia) | 0,49 | 45 |
| | 0,24 | 30 |
| Hexythiazox | 0,98 | 30 |
| | 0,49 | 15 |
| Ia + Hexythiazox | 0,49 + 0,98 | 100 |
| (1 : 2) | 0,24 + 0,49 | 70 |

Beispiel: VI

Behandlung, Prüfobjekt, Versuchspflanze wie Beispiel II

| Verbindung | Wirkstoffkonz. (ppm) | % Mortalität nach 7 d akar. | oviz. |
|---|---|---|---|
| Abamectin (Ia) | 0,12 | 80 | 0 |
| | 0,06 | 30 | 0 |
| | 0,03 | 15 | 0 |
| Hexythiazox | 0,49 | 10 | 30 |
| | 0,24 | 0 | 0 |
| | 0,12 | 0 | 0 |
| Ia + Hexythiazox | 0,12 + 0,49 | 100 | 50 |
| | 0,06 + 0,24 | 70 | 30 |
| (1 : 4) | 0,03 + 0,12 | 50 | 0 |

Beispiel VII

Prüfobjekt: Prodenia litura (Larvenstadium $L_3$)
Versuchsmethode: Unterlagen + Tierbehandlung (Schalentest)
Art der Behandlung: Spritzen analog 600 l/ha

| Verbindung | Wirkstoffkonz. (ppm) | % Mortalität nach 7 d |
|---|---|---|
| Abamectin (Ia) | 1000 | 90 |
| | 500 | 30 |
| Hexythiazox | 2000 | 0 |
| | 1000 | 0 |
| Ia + Hexythiazox | 1000 + 2000 | 100 |
| (1 : 2) | 500 + 1000 | 56 |

Beispiel VIII

Mit der Kohlschabe Plutella sp. befallenes Gemüse, hier: Kopfkohl (Brassica oleracea), wurde unter Freilandbedingungen mit Avermectin (I) und Teflubenzuron (IIc) jeweils allein sowie in Kombination in den nachstehend angegebenen Dosierungen behandelt.

Auf den behandelten Kohlfächen sowie den unbehandelten Kontrollparzellen wurden 1, 3 und 6 Tage nach den Behandlungen die durchschnittliche Anzahl Kohlschaben auf jeweils 10 Pflanzen pro Wiederholung bei insgesamt 4 Wiederholungen pro Versuch ermittelt.

Zur Ermittlung des Wirkungsgrades wurden die gefundenen Werte wie folgt nach der Formel von Abbott (Ab), s. S.W.

0242502

Abbott, J.J. Econ, Entomol. Band 18 (1925) Seite 265 - 267, verrechnet:

% Wirkung (Ab)= Unbehandelt minus behandelt : Unbehandelt x 100

Für die Gewichtsermittlung wurde die Anzahl Pflanzen pro 20 Quadratmeter herangezogen. Die Qualitätseinteilung erfolgte in 3 Klassen (A, B, C), wobei Klasse A die beste Qualität ist, (Kohlköpfe ohne jegliche Fraßschäden), Klasse B leichte Fraßschäden zeigte und Klasse C von schlechter Qualität war, s. nachfolgende Tabelle.

| Wirkstoff g ai/ha IIc | Abamectin Ia | Insektizide Wirkung Ab in % nach 1 | 3 | 6 Tagen | Ertrag absolut kg/20 $m^2$ | davon % in Klasse A | B | C |
|---|---|---|---|---|---|---|---|---|
| | | Einzelanwendung | | | | | | |
| 1. 7,5 | - | 72 | 66 | 72 | 60,5 | 19 | 81 | - |
| 2. 15 | - | 82 | 80 | 83 | 103,7 | 33 | 67 | - |
| 3. 22,5 | - | 86 | 85 | 86 | 100 | 55 | 45 | - |
| 4. 30 | - | 89 | 87 | 88 | 93,7 | 58 | 42 | - |
| 5. 37,5 | - | 89 | 88 | 87 | 135 | 76 | 24 | - |
| 6. - | 4,5 | 84 | 79 | 77 | 111,8 | 57 | 43 | - |
| 7. - | 9,0 | 82 | 81 | 77 | 110,8 | 55 | 45 | - |
| 8. - | 13,5 | 90 | 87 | 87 | 171,9 | 69 | 31 | - |
| 9. - | 18,0 | 94 | 94 | 94 | 166,5 | 83 | 27 | - |
| | | Kombination | | | | | | |
| 10. 7,5 | 4,5 | 91 | 91 | 91 | 139,3 | 97 | 3 | - |
| 11. 7,5 | 9,0 | 92 | 94 | 93 | 149,9 | 98 | 2 | - |
| 12. 7,5 | 13,5 | 96 | 95 | 96 | 133,6 | 100 | - | - |
| 13. 15,0 | 4,5 | 92 | 93 | 93 | 138,4 | 97 | 3 | - |
| 14. 22,5 | 4,5 | 92 | 93 | 93 | 112,4 | 95 | 5 | - |
| 15. 30,0 | 4,5 | 95 | 96 | 94 | 112,9 | 96 | 4 | - |

PATENTANSPRÜCHE:

1. Schädlingsbekämpfungsmittel, gekennzeichnet durch einen Gehalt an mindestens einer Verbindung der Formel I

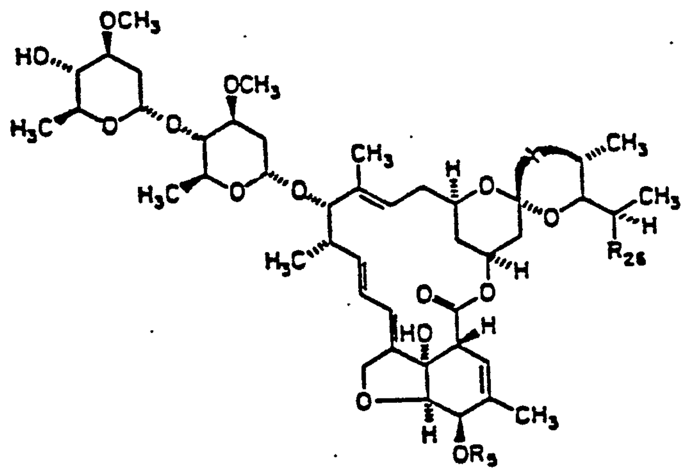

(I),

worin

$R_5$ = H oder $CH_3$

$R_{26}$ = $CH_3$ oder $C_2H_5$ und

X = $-CH{=}CH-$, $-CH_2-CH(OH)-$ oder $-CH_2-CH_2-$ bedeuten, in Kombination mit einem Phosphorsäureester der Gruppe Azinphos-ethyl, Azinphos-methyl, 1-(4-Chlorphenyl)-4-[(O-ethyl, S-propyl)phosphoryloxy]pyrazol Coumaphos, Demeton, Demeton-S-methyl, Dimethoat, Ethoprophos, Etrimfos, Fenitrothion, Fenthion, Heptenophos, Phosalon, Pirimiphos-ethyl, Pirimiphos-methyl, Profenofos, Prothiofos, Sulprofos oder Triazophos, oder

einem Carbamat der Gruppe Bendiocarb, 2-(1-Methylpropyl)phenylmethylcarbamat , Butocarboxim, Butoxicarboxim, Carbosulfan, Cloethocarb, Isoprocarb, Oxamyl, Pirimicarb, Promecarb oder Thiodicarb oder

einem Carbonsäureester der Gruppe Allethrin, Alphametrin, Bioallethrin, Bioresmethrin, Cycloprothrin, Cyfluthrin, Cyhalothrin, 2,2-Dimethyl-3-(2-chlor-2-trifluormethylvinyl)cyclopropancarbonsäure-(α-cyano-3-phenyl-2-methylbenzyl)ester, Fenpropathrin, Fenfluthrin, Flucythrinate, Flumethrin, Tralomethrin oder

einem Benzoylharnstoff der Formel II

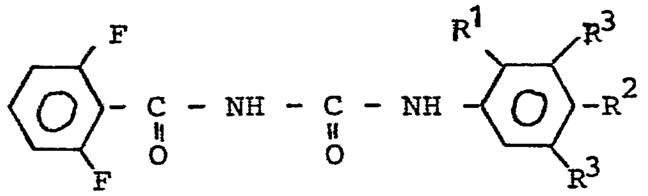

(II)

worin

$R^1$ H oder F,

$R^2$ Fluor $(C_1-C_4)$Halogenalkoxy, Phenoxy oder Pyridyloxy, die beide durch ein bis drei Reste der Gruppe Chlor oder Trifluormethyl substituiert sind, und

$R^3$ H oder Cl bedeuten, oder

einem Wirkstoff der Gruppe Azocyclotin, Binapacryl, Bensultap, Bisclofentezin, Buprofecin, Cartap, Cyromacin, Endosulfan, Ethoproxyfen, Fenoxycarb, Flubenzimin, Hexythiazox, Ethofenprox, 5-/4-(4-Ethoxyphenyl)-4-methylpentyl/-2-fluor-1,3-diphenylether, 3-(2-Chlorphenyl)-3-hydroxy-2-(2-phenyl-4-thiazolyl)-propennitril oder Thiocyclam, mit Bacillus thuringiensis oder einem Kernpolyeder- oder Granulosevirus.

2. Mittel gemäß Anspruch 1, dadurch gekennzeichnet, daß es als Verbindung der Formel I das Produkt Abamectin enthält.

3. Mittel gemäß Ansprüchen 1 oder 2, dadurch gekennzeichnet, daß es als Kombinationspartner für die Verbindung der Formel I einen Wirkstoff der Gruppe Binapacryl, Endosulfan, Heptenophos, Hexythiazox, Triazophos oder Teflubenzuron enthält.

4. Mittel gemäß einem oder mehreren der Ansprüche 1, 2 oder 3, dadurch gekennzeichnet, daß die Komponenten in einem synergistisch wirkenden Verhältnis kombiniert werden.

5. Mittel gemäß einem oder mehreren der Ansprüche 1,2 oder 3, dadurch gekennzeichnet, daß das Gewichtsverhältnis der Kombinationspartner zwischen 20:1 und 1:150 variiert.

6. Verfahren zur Bekämpfung von tierischen Schädlingen, dadurch gekennzeichnet, daß man diese oder ihren Lebensraum mit einer wirksamen Menge eines Mittels gemäß Ansprüchen 1 bis 5 behandelt.

Patentansprüche Spanien:

1. Verfahren zur Bekämpfung von tierischen Schädlingen, dadurch gekennzeichnet, daß man diese oder ihren Lebensraum mit einer wirksamen Menge eines Mittels, das mindestens eine Verbindung der Formel I

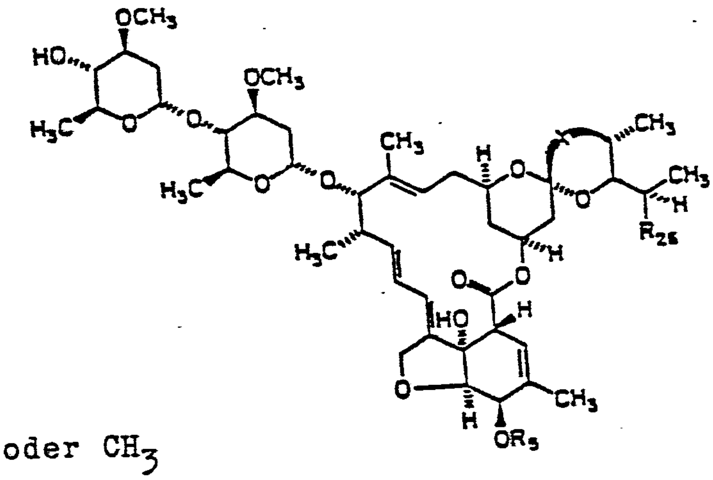

(I),

worin

$R_5$ = H oder $CH_3$

$R_{26}$ = $CH_3$ oder $C_2H_5$ und

X = $-CH=CH-$, $-CH_2-CH(OH)-$ oder $-CH_2-CH_2-$ bedeuten, in Kombination mit einem Phosphorsäureester der Gruppe Azinphos-ethyl, Azinphos-methyl, 1-(4-Chlorphenyl)-4-[(O-ethyl, S-propyl)phosphoryloxy]pyrazol Coumaphos, Demeton, Demeton-S-methyl, Dimethoat, Ethoprophos, Etrimfos, Fenitrothion, Fenthion, Heptenophos, Phosalon, Pirimiphos-ethyl, Pirimiphos-methyl, Profenofos, Prothiofos, Sulprofos oder Triazophos, oder

einem Carbamat der Gruppe Bendiocarb, 2-(1-Methylpropyl)phenylmethylcarbamat , Butocarboxim, Butoxicarboxim, Carbosulfan, Cloethocarb, Isoprocarb, Oxamyl, Pirimicarb, Promecarb oder Thiodicarb oder

einem Carbonsäureester der Gruppe Allethrin, Alphametrin, Bioallethrin, Bioresmethrin, Cycloprothrin, Cyfluthrin, Cyhalothrin, 2,2-Dimethyl-3-(2-chlor-2-trifluormethylvinyl)cyclopropancarbonsäure-(α-cyano-3-phenyl-2-methylbenzyl)ester, Fenpropathrin, Fenfluthrin, Flucythrinate, Flumethrin, Tralomethrin oder

einem Benzoylharnstoff der Formel II

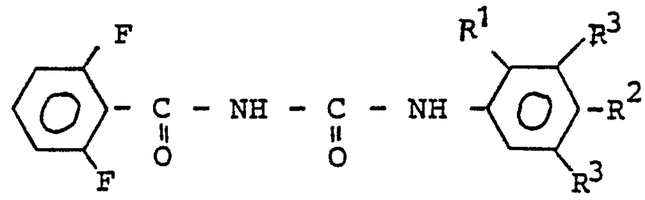

(II)

worin

$R^1$ H oder F,

$R^2$ Fluor $(C_1-C_4)$Halogenalkoxy, Phenoxy oder Pyridyloxy, die beide durch ein bis drei Reste der Gruppe Chlor oder Trifluormethyl substituiert sind, und

$R^3$ H oder Cl bedeuten, oder

einem Wirkstoff der Gruppe Azocyclotin, Binapacryl, Bensultap, Bisclofentezin, Buprofecin, Cartap, Cyromacin, Endosulfan, Ethoproxyfen, Fenoxycarb, Flubenzimin, Hexythiazox, Ethofenprox, 5-/4-(4-Ethoxyphenyl)-4-methylpentyl7-2-fluor-1,3-diphenylether, 3-(2-Chlorphenyl)-3-hydroxy-2-(2-phenyl-4-thiazolyl)-propennitril oder Thiocyclam, mit Bacillus thuringiensis oder einem Kernpolyeder- oder Granulosevirus, behandelt.

2. Verfahren gemäß Anspruch 1, dadurch gekennzeichnet, daß das Mittel als Verbindung der Formel I das Produkt Abamectin enthält.

3. Verfahren gemäß Ansprüchen 1 oder 2, dadurch gekennzeichnet, daß das Mittel als Kombinationspartner für die Verbindung der Formel I einen Wirkstoff der Gruppe Binapacryl, Endosulfan, Heptenophos, Hexythiazox, Triazophos oder Teflubenzuron enthält.

4. Verfahren gemäß einem oder mehreren der Ansprüche 1, 2 oder 3, dadurch gekennzeichnet, daß die Kombinationspartner in einem synergistisch wirkenden Verhältnis miteinander kombiniert sind.

5. Verfahren gemäß einem oder mehreren der Ansprüche 1, 2 oder 3, dadurch gekennzeichnet, daß das Gewichtsverhältnis der Kombinationspartner zwischen 20:1 und 1:150 variiert.